(19) **Europäisches Patentamt / European Patent Office / Office européen des brevets**

(11) **EP 2 874 734 B1**

(12) **EUROPEAN PATENT SPECIFICATION**

(45) Date of publication and mention of the grant of the patent:
**13.04.2022 Bulletin 2022/15**

(21) Application number: **13823285.5**

(22) Date of filing: **23.07.2013**

(51) International Patent Classification (IPC):
**B01D 69/12** (2006.01)     **B01D 71/36** (2006.01)
**B01D 36/00** (2006.01)     **B01D 69/10** (2006.01)
**B01D 39/08** (2006.01)     *B01D 39/16* (2006.01)
*D04B 1/16* (2006.01)

(52) Cooperative Patent Classification (CPC):
**B01D 71/36; B01D 39/083; B01D 39/1692;**
**B01D 69/10; D04B 21/16;** B01D 2323/14;
D10B 2321/042; D10B 2505/04

(86) International application number:
**PCT/US2013/051553**

(87) International publication number:
**WO 2014/018470 (30.01.2014 Gazette 2014/05)**

(54) **FILTRATION ARTICLE WITH FLUOROPOLYMER KNIT**

FILTERUNGSARTIKEL MIT STRICKWARE AUS FLUOROPOLYMER

ARTICLE DE FILTRATION AYANT UN TRICOT DE POLYMÈRE FLUORÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.07.2012 US 201261674677 P**
**21.06.2013 US 201313923810**
**22.07.2013 US 201313947733**

(43) Date of publication of application:
**27.05.2015 Bulletin 2015/22**

(73) Proprietor: **Entegris, Inc.**
**Billerica, MA 01821 (US)**

(72) Inventors:
• **PROPST, Eric, Keith**
**Avondale, PA 19311 (US)**
• **SPECK, Steven, H.**
**Elkton, MD 21921 (US)**

(74) Representative: **Greaves Brewster LLP**
**Copa House**
**Station Road**
**Cheddar, Somerset BS27 3AH (GB)**

(56) References cited:
EP-A1- 0 217 482        EP-A2- 1 059 114
WO-A2-00/02639        US-A- 5 096 473
US-A1- 2007 075 014        US-A1- 2009 187 197
US-A1- 2010 159 766        US-A1- 2012 061 314
US-B1- 6 334 881        US-B2- 7 378 020

EP 2 874 734 B1

**Description**

BACKGROUND OF THE INVENTION

Porous membranes are widely used in the filtration of particulate, ionic, microbial and other contaminants from fluids in pharmaceutical, microelectronics, chemical and food industries. In use, the membranes are formed into a device (e.g., pleated cartridges which may be housed within a capsule, hollow tubes, stack of flat disks, etc.) which is placed in the fluid stream to be filtered.

To meet chemical and temperature resistance requirements, most filtration devices used in semiconductor fabrication are constructed entirely of fluoropolymer materials. The trend towards narrower line widths in semiconductor manufacturing has placed an ever increasing burden on particulate contamination control in semiconductor fabrication. Such a trend has led to the introduction of fluoropolymer filtration membranes having rated pore sizes as low as 10 nm.

While such membranes provide superior particle filtration, there is a desire to extend the life cycle, or time-in-use, of the membranes, while maintaining the filtration efficiency thereof. In this regard, in typical filtration implementations, a support layer may be positioned downstream of a fluoropolymer filtration membrane to support the membrane against the pressure of fluid flow. In addition, the support layer or another downstream layer may provide drainage functionality (e.g., by acting as a spacing layer with downstream passageways therethrough to thereby facilitate fluid flow through the membrane). In that regard, an upstream drainage layer may also be utilized.

In such arrangements, known upstream and downstream layers are constructed of fluoropolymeric fiber materials (e.g., PTFE, PFA or PVDF) in the form of wovens, non-wovens or nets. Over extended periods, such woven, non-woven or net layers may exhibit movement of fibers in the layer structure to a degree that renders such layers unable to provide the desired support to the filtration membrane against applied fluid pressure. This may result in damage to the membrane microstructure, and degradation of filtration efficiency and drainage functionality, to the point that filter replacement is required. As may be appreciated, filter replacement entails not only system downtime, but also results in added filter costs and utilization of maintenance personnel resources.

Therefore, a need exists for a fluid filtration article having extended time-in-use advantages, while providing satisfactory filtration efficiency over the extended life of the device. Fluid filtration articles constructed with the knit materials of the present invention fulfill such a need.

US2010/0159766 A1 discloses reinforced PTFE fabric and laminate structures, and methods for making the same. The laminate of a fabric comprises a plurality of PTFE fibres overlapping at intersections, wherein at least a portion of the intersections have PTFE masses extending from at least one of the overlapping PTFE fibers, and which lock the overlapping PTFE fibers together, bonded to a membrane by at least said PTFE masses.

SUMMARY OF THE INVENTION

The invention is defined in the claims.

In one aspect, an improved filtration article is provided for filtering particles from a fluid stream that includes first and second layers positionable across a fluid stream, wherein the first layer comprises a porous PTFE for filtering particles from the fluid stream and the second layer comprises a plurality of strands of fluoropolymer fibers arranged to form a stable knit. The second layer provides for at least one of support and drainage of the first layer.

The knit fluoropolymer fiber layer includes a plurality of interlocking regions that are each defined by corresponding different sets of at least two interlocking loop portions of the plurality of strands of fluoropolymer fibers. The interlocking regions of the knit define a plurality of wales and a plurality of courses, wherein for at least a first portion of the plurality of strands each strand comprises different loop portions that partially define different, alternating ones of the interlocking regions located along at least two different ones of the plurality of wales.

The fluid stream has a fluid pressure load upon such filtration article of between about 6.89 kPa (1 psid) and 68.9 kPa (10 psid), wherein the plurality of interlocking regions of the knit layer define a plurality of voids therebetween across the knit layer. In this regard, each of the voids has a first area prior to being positioned in the fluid stream and a corresponding second area while positioned in the fluid stream. For each of the plurality of voids the corresponding second area is less than about two times the corresponding first area thereof.

In relation to such aspect, the present inventors have recognized that the combinative use of a porous PTFE filtration layer and a knit fluoropolymer fiber layer yields a filtration article having an improved life cycle, while providing efficient particle filtration. More particularly, the inventors have recognized that the utilization of a knit fluoropolymer fiber layer having fiber strands with interlocking loop portions provides enhanced dimensional stability over extended time periods, thereby facilitating realization of the noted advantages.

In contemplated implementations, the porous PTFE filtration has a bubble point, measured as described hereinbelow, greater than about 207 kPa (30 psi). For example, in fine particulate filtration applications, the porous PTFE filtration layer may have a bubble point greater than about 345 kPa (50 psi), and preferably greater than about 552 kPa (80 psi) (e.g., for use in semiconductor fabrication applications).

In certain implementations, the improved filtration article may be provided so that, within a cross section of each of the plurality of interlocking regions, different lengths of the corresponding interlocking loop portions are located within at least three different stratums. As may be appreciated, such an arrangement enhances stability across the knit while accommodating tortuous fluid flow about the fiber strands in the interlocking regions.

For each of the interlocking regions the fiber strands of the knit layer may be provided so that the corresponding interlocking loop portions extend about an arc of at least 90° along different corresponding arcuate paths. In some implementations, at least a portion of the interlocking loop portions corresponding with each of interlocking regions may be provided to extend about an arc of at least 180° along different corresponding arcuate paths. In certain embodiments, at least a portion of the interlocking loop portions corresponding with at least a portion of the interlocking regions may be provided as closed loops.

The improved filtration article may be provided so that each of the plurality of interlocking regions is defined by corresponding different sets of at least three interlocking loop portions of the strands of fluoropolymer fibers. Such approach may be utilized to yield further enhanced dimensional stability.

In various embodiments, the strands of fluoropolymer fibers utilized in the knit layer may be provided to have various features. For example, all or at least a portion of the fluoropolymer fibers may be of a rounded outer configuration and/or may be twisted. In some implementations, the strands of fluoropolymer fibers may comprise monofilaments or multifilaments. Further, in some applications, the strands of fluoropolymer fibers may comprise hollow filaments.

As may be appreciated, the knit layer of the improved filtration article may be of a warp knit type. By way of primary example, a Raschel knit, a Tricot knit, or other similar knit may be employed.

In this regard, and as noted above, for at least a first portion of the plurality of strands utilized in the knit layer each strand includes different loop portions that partially define different, alternating ones of the interlocking regions located along at least two different ones of the plurality of wales. Stated differently, for at least a first portion of the strands, each strand may zig-zag between and form loop portions at different, alternating ones of the interlocking regions located along at least two different wales of the knit layer. Such an arrangement advantageously distributes a fluid pressure load applied to the knit layer by distributing the load at and across interlocking regions located in different wales and courses. Further, in some embodiments, the knit layer may be provided so that, for at least a second portion of the plurality of strands of the knit layer, each strand comprises different loop portions that partially define different ones of all or substantially all of the interlocking regions located along a corresponding one of the plurality of wales, thereby yielding further load distribution.

In an additional aspect, the knit layer of the improved filtration article may be provided with voids, or open spaces, which extend between the fiber strands and plurality of interlocking regions through the knit layer. In this regard, the knit layer may be provided so that, on each of the opposing sides of the knit layer, the voids define at least about 10% of the corresponding areas, thereby facilitating fluid flow therethrough. Further, the knit layer may be provided so that the strands of fluoropolymer fibers, including the interlocking regions defined thereby, define at least about 20% of the areas of the opposing sides of the knit layer, thereby facilitating effective use of the knit layer as a drainage layer in the filtration article. In some arrangements the interlocking regions may define at least about 40% of the areas.

In contemplated embodiments of an improved filtration article, a knit fluoropolymer fiber layer may be positioned downstream of a porous PTFE layer (e.g., a PTFE membrane) to provide for at least support of the PTFE layer. More particularly, the knit layer may be provided to support the porous PTFE layer against the pressure of a fluid stream passing therethrough. Further, the knit layer may function as a drainage, or spacing, layer. In various arrangements a downstream knit layer may be disposed directly adjacent the PTFE layer or with one or more intermediate layers therebetween. The downstream knit layer may be interconnected to the PTFE layer.

An additional knit fluoropolymer fiber layer may be disposed upstream of the porous PTFE layer to provide drainage functionality. The upstream knit layer may be disposed directly adjacent to the PTFE layer or with one or more intermediate layers therebetween. The upstream knit layer may be interconnected to the PTFE layer.

In some implementations, a knit fluoropolymer fiber layer and a porous PTFE layer may each be of a pleated configuration. More particularly, such pleated layers may be disposed in at least partially nested co-relation. In one arrangement, the nested, pleated layers may be disposed about and along an axis to define a filtration article having a tubular configuration. In this regard, the pleats of each layer may be provided to extend substantially parallel to the axis. The filtration article may be disposed so that a fluid stream flows through the filtration article from the outside of the tubular configuration thereof to an internal space within the tubular configuration. Alternatively, an opposite fluid flow direction through the tubular configuration may be employed.

In a further aspect, a filtration article may be provided for positioning in a fluid stream applying a fluid pressure load upon the filtration article of between about 6.89 kPa (1 psid) and 68.9 kPa (10 psid), wherein the knit layer is provided so that each of the interlocking regions thereof is located at corresponding distances from adjacent ones of the plurality of interlocking regions along the wales and courses thereof. In turn, for each of the plurality of interlocking regions the corresponding distances, while the knit layer is positioned in the fluid stream, may be within 200% of initial values thereof prior to being positioned in the fluid stream.

In another aspect, a method for filtering particles from fluid in a fluid stream is provided, as set out in the appended set of claims. The method includes the step of filtering particles from a fluid stream utilizing a porous PTFE membrane positioned across the fluid stream. The method further includes supporting the porous PTFE membrane against the fluid pressure load applied by the fluid stream utilizing a stable knit layer positioned downstream of the porous PTFE membrane.

The stable knit layer employed in the method includes a plurality of strands of fluoropolymer fibers arranged to form a knit having a plurality of interlocking regions that are each defined by corresponding different sets of at least two interlocking loop portions of the plurality of strands of fluoropolymer fibers. In this regard, the method may include distributing of the fluid pressure load across the knit layer at the interlocking regions.

Numerous additional features and advantages of the present invention will become apparent to those skilled in the art upon consideration of the embodiment descriptions provided hereinbelow.

## BRIEF DESCRIPTION OF THE DRAWINGS

Fig. 1 illustrates an embodiment of a filtration device comprising a filtration article embodiment of the present invention,

Figs. 2A and 2B illustrate embodiments of a knit layer of a filtration article embodiment of the present invention,

Figs. 3A and 3B are images of a knit layer embodiment of a filtration article embodiment of the present invention.

Fig. 4A illustrates the knit construction of another knit layer embodiment shown in Fig. 4B.

## DETAILED DESCRIPTION OF THE INVENTION

Described herein are embodiments of fluid filtration articles comprising at least one layer of a fluoropolymer knit material. The knit layer may be used as a support and/or drainage layer in a filter cartridge that may be made wholly of fluoropolymer materials. Such knit layer(s) provide for filtration articles having improved time-in-use qualities, with satisfactory particle filtration efficiency.

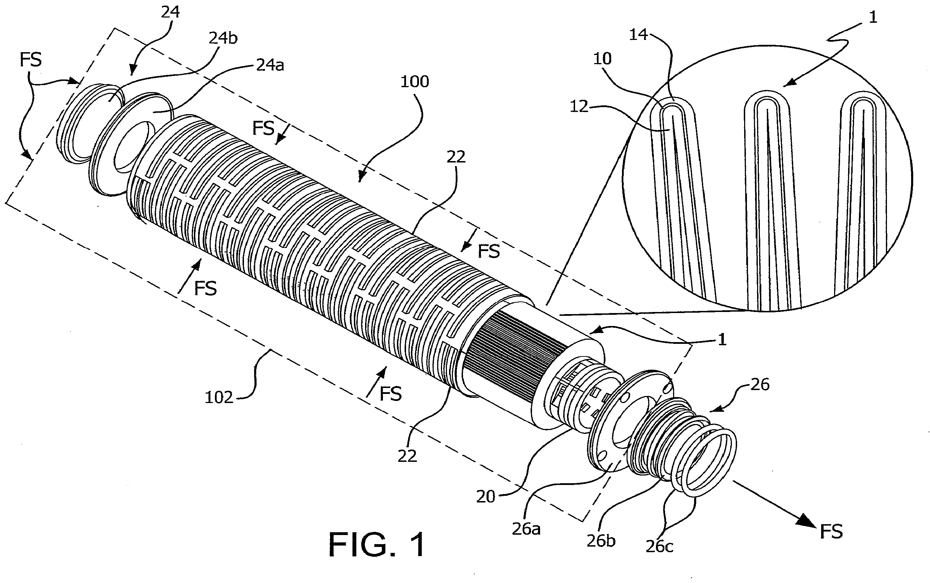

Fig. 1 is an illustration of a filter cartridge (100) that may be constructed wholly of fluoropolymer materials and that may be sized for positioning within a filtration capsule (102) (depicted by phantom lines in Fig. 1) through which a fluid stream (FS) passes, The filter cartridge (100) may include a filtration article (1) that comprises a pleated porous fluoropolymer filtration membrane (10), a pleated fluoropolymer knit layer (12) disposed on the downstream side of the filtration membrane (10), and an optional pleated fluoropolymer knit layer (14) disposed on the upstream side of the filtration membrane (10). As shown, the filtration membrane (10), knit layer (12) and knit layer (14) may be at least partially nested. One or both ends of the pleated filtration membrane (10), knit layer (12), and knit layer (14) of filtration article (1) may be potted to sealably interconnect such end(s).

As may be appreciated, the utilization of a pleated configuration in filtration articles provides for increased filtration capacity by increasing the operative size of filtration membrane (10). In the embodiment shown in Fig. 1, the pleated filtration article (1) is of a cylindrical, tubular configuration having outwardly-projecting pleats of an inverted V-shaped configuration that are positioned about and extend along a longitudinal axis from end-to-end of the filtration article (1). In this regard, the peats define V-shaped regions, or valleys, between adjacent ones of the pleats about and along the longitudinal axis of the article.

The filter cartridge (100) may also include an inner core (20), an outer cage (22), and end assemblies (24), (26). The end assembly (24) may include an annular member (24a) having an annular interface interconnected to outer cage (22) (e.g., via a surface-to-surface melt operation), and a closure member (24b) having an annular surface interconnected to annular member (24a) (e.g., via a surface-to-surface melt operation). The end assembly (26) may include an annular member (26a) having an annular surface interconnected to an annular surface of a flanged tubular interface member (26b), and seal members (26c) (e.g., O-Rings) disposed on the tubular interface member (26b), wherein the end assembly (26) may be sealably interconnected to an exit port from filtration capsule (102).

The fluoropolymer membrane (10) may comprise an expanded PTFE membrane which may be prepared according to the methods described in U.S. Patent No. 7,306,729, U.S. Patent No. 3,953,566, U.S. Patent No. 5,476,589 and U.S. Patent No. 5,183,545. The fluoropolymer membrane may also comprise an expanded polymeric material comprising a functional TFE copolymer material comprising a microstructure characterized by nodes interconnected by fibrils, wherein the functional TFE copolymer material comprises a functional copolymer of TFE and PSVE. The functional TFE copolymer material may be prepared according to the methods described in U.S. Patent Publication No. 2010/0248324.

The core (20), cage (22) and end assemblies (24), (26) may be comprised of known thermoplastic fluoropolymers such as PFA, FEP, ETFE, PCTFE, ECTFE, PVDF, etc.

As shown in Fig. 1, the filter cartridge (100) may be disposed so that the fluid stream (FS) flowing into filtration capsule (102) flows through openings in cage (22), through filtration article 1, and through openings of core (20) to a tubular passageway extending through and out of the filter cartridge (100) via end assembly (26). The upstream knit layer (14) acts as a spacer to provide passageways for fluid flow between and through the outwardly-facing surfaces of adjacent ones of the pleats of the filtration membrane (10). The downstream layer (12) acts as a spacer to provide passageways for fluid flow between and through the inwardly-facing surfaces of the filtration membrane(10). The downstream knit layer (12) is further disposed to provide support for the filtration membrane (10) against applied fluid pressure.

In the later regard, in the illustrated arrangement the downstream layer (12) may be disposed directly adjacent to filtration membrane (10) to provide surface-to-surface support of the filtration membrane (10) against the fluid pressure load applied by fluid stream FS. In other arrangements, the downstream layer (12) may provide support to filtration membrane (10) with one or more intermediate layers positioned therebetween.

As noted above and further described below, the downstream layer (12) may be of a knit construction that advantageously distributes the fluid pressure load across the downstream layer (12) via the provision of interlocking regions, thereby yielding enhanced stability and increased time-in-use attributes relative to prior fluid filtration articles. In certain arrangements such as the pleated configuration shown in Fig. 1, a knit construction of downstream layer (12) also defines passageways between and about the interlocking regions to facilitate fluid flow therethrough, i.e., membrane drainage functionality.

In various embodiments, filtration articles (e.g., filter article (1) referenced above) include a filtration layer (e.g., filtration membrane (10) referenced above) and one or more knit layer(s) (e.g., downstream layer (12) and/or upstream layer (14) referenced above) that comprise strands of fluoropolymer fibers arranged to define a knit with interlocking regions having interlocking loops which reduce material stretch in at least one direction to yield a more dimensionally stable knit. Also, the interlocking loop configuration of the knit construction provides additional space to allow fluid flow patterns in and around interlacing fibers. This is advantageous compared to a woven construction having orthogonal fibers in which flow may be restricted to the woven's mesh openings only.

The fibers of the knit layer(s) may comprise fluoropolymers selected from PTFE, PVDF, FEP or PFA. Preferably, a PTFE fiber may be used to construct the knit layer. A PTFE knit layer is constructed from yarn having at least one PTFE fiber. The term PTFE is meant to also include expanded PTFE, expanded modified PTFE, and expanded copolymers of PTFE, as described in U.S. Patent Nos. 5,708,044, 6,541,589, and 7,531,611, and U.S. Patent Appl. Nos. 11/906,877 and 12/410,050. The PTFE fiber comprises oriented fibrils and may be nonporous or porous. The PTFE fiber may be a monofilament or it may be two different PTFE fibers having differing deniers, density, length or dimensional differences. A multiple strand of yarn having at least one PTFE fiber and at least one other type of fluoropolymer fiber that is not PTFE may also be employable in filtration article embodiments.

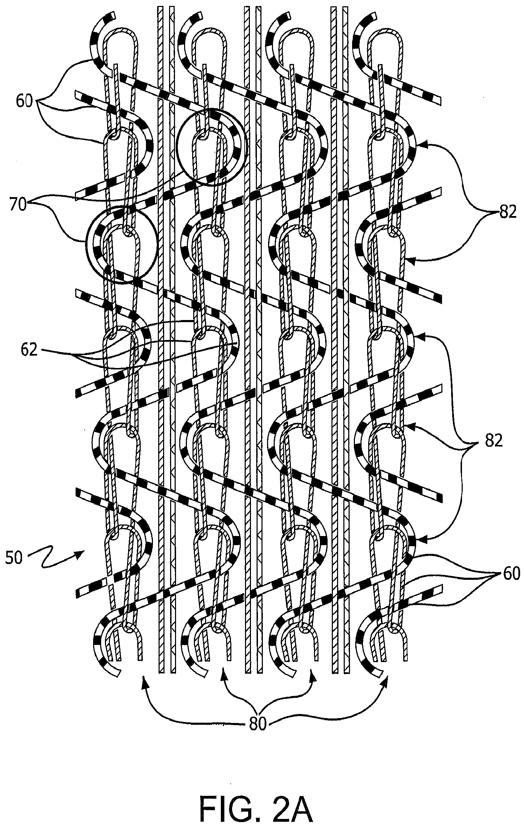

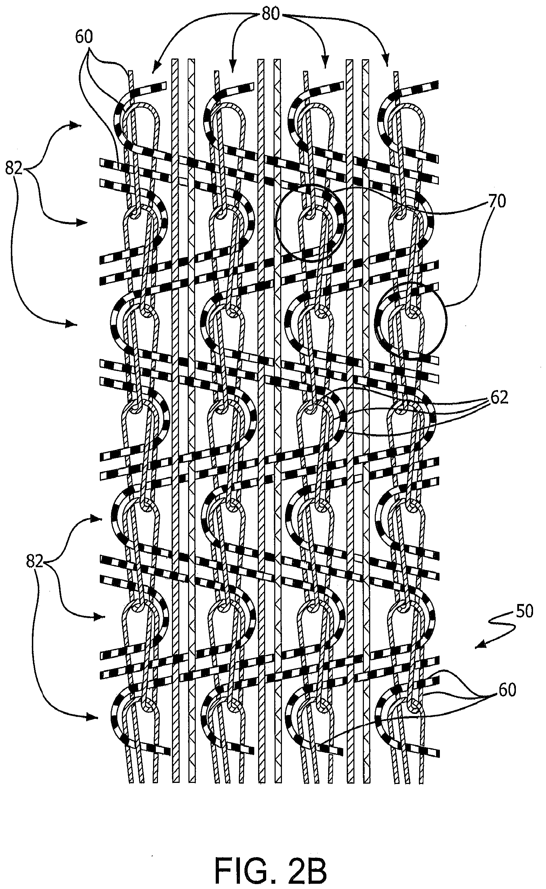

Figs. 2A and 2B illustrate embodiments of the construction of a knit layer (50) of a filtration article embodiment. As will be understood, knit layer (50) may be positioned downstream and/or upstream of a filtration layer comprising a porous PTFE material (e.g., a PTFE membrane) for filtering particles from a fluid stream. In this regard, knit layer (50) may provide support and drainage functionality when located downstream of a filtration layer, and may provide drainage functionality when located upstream of a filtration layer.

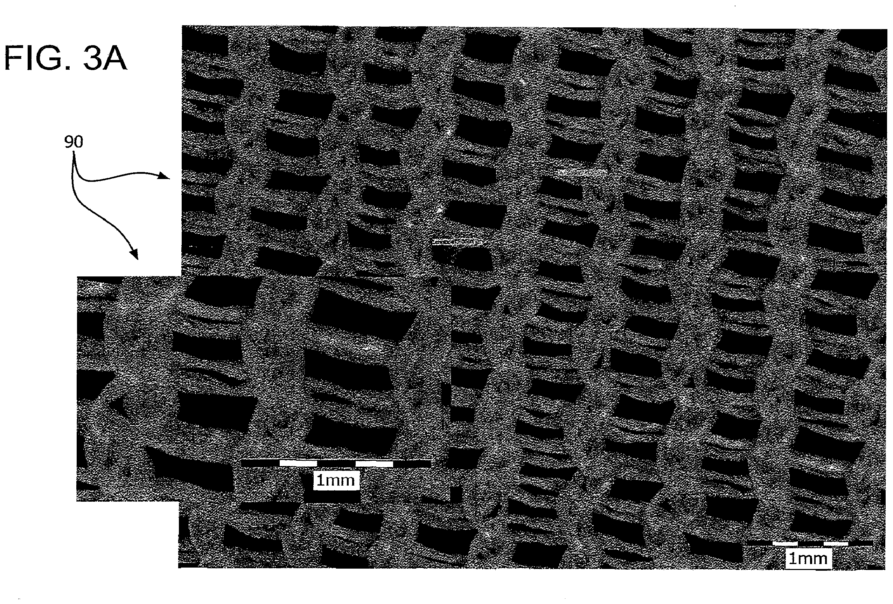

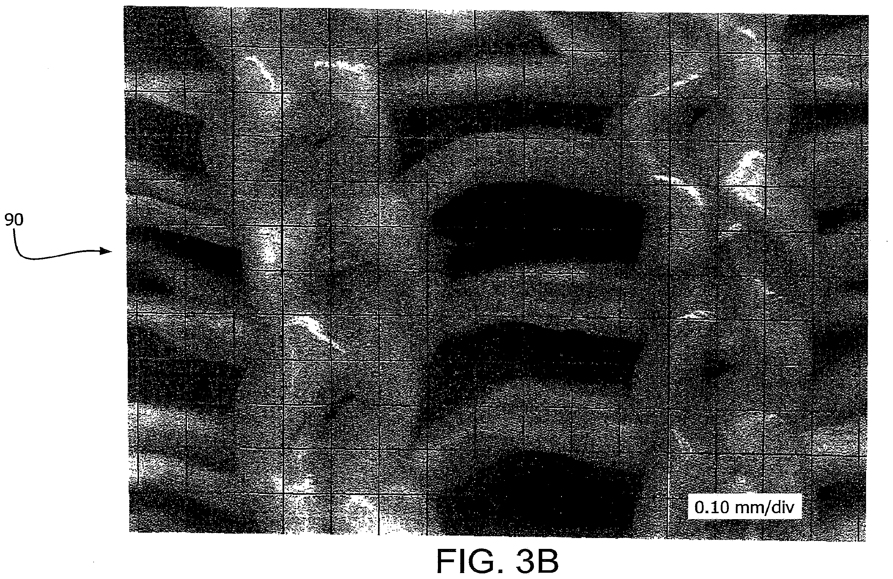

As shown in the embodiments of Figs. 2A and 2B, knit layer (50) comprises strands (60) of fluoropolymer fibers arranged to define a plurality of interlocking regions (70), two of which are encircled in each of Figs. 2A and 2B. The knit layer (50) shown in Figs. 2A and 2B illustrates the interlocking regions (70) in an untightened state for purposes of understanding, and it will be understood that the interlocking regions (70) are tightened prior to use (e.g., as shown in the embodiment of Figs. 3A and 3B). As shown, each of the interlocking regions (70) are each defined by corresponding different sets of at least two interlocking loop portions (62) of the strands (60). The interlocking regions (70) define a plurality of wales (80) and a plurality of courses (82).

The interlocking regions (70) may function to restrain relative movement and/or elongation of strands (60) between the interlocking regions (70) by distributing fluid pressure loads therebetween, thereby yielding enhanced stability. In this regard, in the embodiments shown in Figs. 2A and 2B, the interlocking regions (70) are each defined by corresponding different sets of three interlocking loop portions (62) of the strands of fluoropolymer fibers (60). As shown, for a portion of the strands (60) each strand comprises different loop portions that partially define different, alternating ones of the plurality of interlocking regions (70) located along at least two different ones of said plurality of wales (80). Further, for another portion of strands (60) each strand comprises different loop portions that partially define different ones of all of the interlocking regions (70) located in a corresponding one of the wales (80). Such provision of interlocking regions (70) distributes a fluid pressure load applied to knit layer (50) by distributing the load at and across interlocking regions (70) located in different wales and courses.

For example, in the embodiment of Fig. 2A, for a portion of the strands (60), each strand comprises different loop portions that partially define different alternating ones of the plurality of interlocking regions (70) located along two adjacent ones of the wales (80), while in the embodiment of Fig. 2B, for a portion of the strands (60), each strand comprises different loop portions that partially define different alternating ones of the plurality of interlocking regions (70) located along two of the wales (80) having another one of the wales (80) located therebetween.

In various embodiments, the loop portions of strands (60) defining interlocking regions (70) may be disposed to extend about an arc of at least 90° along different corresponding arcuate paths. With reference to the embodiments of Figs. 2A and 2B at least a portion of the loop portions of strands (60) corresponding with the interlocking regions (70) may be disposed to extend about an arc of at least 180° along different corresponding arcuate paths.

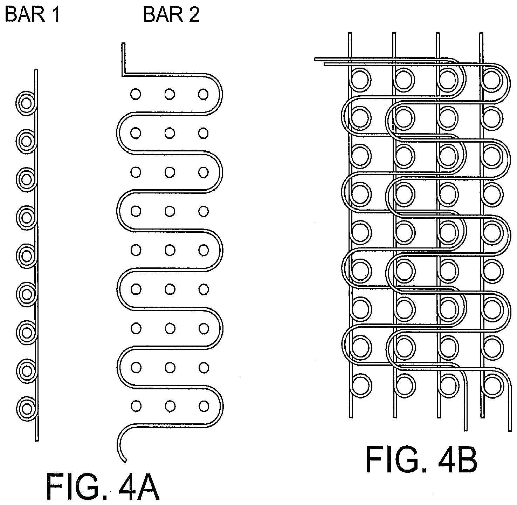

Figs. 3A and 3B show images of an embodiment of a PTFE knit layer (90) of the present invention. The knit layer (90) is comprised of expanded PTFE (ePTFE) fiber and is constructed using a 2 bar in lay Raschel locked stitch design. The construction of such 2 bar in lay Raschel design is shown in Figs. 4A and 4B. The knit layer (90) provides a dimensionally stable construction in the wale and warp directions.

The low coefficient of friction of PTFE poses a challenge in constructing a dimensionally stable knit. However, by using an interlock stitch design employing a 2 bar in lay interlock stitch, in the knit layers shown in Figs. 2A, 2B, 3A and 3B, a dimensionally stable knit may be constructed.

While Figs. 2A, 2B, 3A, 3B, 4A and 4B show specific knit design embodiments, it should be understood that any knit pattern yielding dimensional stability in the wale and/or course direction(s) such as a weft knit using an interlock stitch Tricot design may also be used.

The fluoropolymer knits described herein may be placed either upstream or downstream of a filtration membrane. Knit layers may also be placed on both upstream and downstream of the filtration membrane. The knit layers may be provided in a variety of configurations (e.g., planar, planar with pleats, tubular, tubular with pleats, etc.). In one arrangement, knit layers may be positioned on opposing sides of a filtration membrane and the layers may be pleated and sealed on the ends to form a pleated filtration cartridge, as contemplated above, using known methods described in the art. Further, the cartridge may further be placed in a capsule or housing through which a fluid stream passes.

In various embodiments an intermediate layer may be disposed between the filtration membrane and the knit layer. The intermediate layer may provide additional support. Suitable intermediate layers include porous fluoropolymer nets, wovens, membranes or non wovens. A preferred intermediate layer may be a porous fluoropolymer article described in U.S. Patent Publication No. 2012/064273.

The foregoing description of the present invention has been presented for purposes of illustration and description.

The embodiments described hereinabove are further intended to explain known modes of practicing the invention and to enable others skilled in the art to utilize the invention in such or other embodiments and with various modifications required by the particular application(s) or use(s) of the present invention. It is intended that the appended claims be construed to include alternative embodiments to the extent permitted by the prior art.

TEST METHODS AND MEASUREMENTS

Viscous Liquid Flow Test

An aqueous solution of glycerol was prepared by mixing 75% glycerol and 25% DI water on a volume basis. The viscosity of the solution at room temperature (75°F) was measured to be about 40 cp. A filtration article test sample (47 mm diameter) was placed securely inside a holder. The glycerol solution was pumped through the test sample, wherein the initial pressure differential across the test sample was about 345 kPa (50 psid). The test sample comprised a stack of a filtration membrane and a downstream knit layer. Optionally, the test sample could include an intermediate layer and/or upstream knit layer. The pressure differential across the test sample was recorded, as noted in one or more of the Examples below, during the entire duration of the test.

The time taken for the initial pressure differential to drop from 345 kPa (50 psid) to a lower value was used as an indicator of the sample strength. The longer it takes for the drop in differential pressure, the stronger, or more stable, the sample. For a sample of low strength, stability, it would take less than 10 minutes for the differential pressure to drop from 345 kPa (50 psid) to a lower value. High strength samples typically maintain the initial differential pressure of 345 kPa (50 psid) for about at least 24 hours.

It is believed that this test provides a stability measure of the ability of the drainage layer to adequately support the membrane layer against applied pressure. It is also believed that this test offers a correlation to long term particle filtration efficiency of the test sample. That is, a test sample of high strength as indicated by this test would also have superior long term particle filtration efficiency.

Long Term Particle Filtration Efficiency Test

This test was used to measure long term particle filtration efficiency of the filtration article test sample referenced above. The sample was placed on a stainless steel plate (diameter 90 mm) with 19 holes of diameter 9.6 mm spaced apart from each other such that the center to center distance between any two holes is 9.6 mm. The sample, along with the stainless steel plate was then placed inside a holder with a fluid inlet and outlet. The particle filtration efficiency was measured using the following test procedure and reported as the Initial Filtration Efficiency.

The test sample was first wet with IPA and then subjected to an initial rinse using 250 mL of a solution containing 0.1% Triton® X-100 in DI water. This rinse was done at about 20.7 kPa (3 psid) differential pressure across the test sample. The effluent was collected and labeled as "background,"

The challenge solution was prepared using 49 nm microspheres (Part No. B50, Thermo Fisher Scientific Inc.). The 49 nm challenge solution was prepared by adding 83 micro liter of a 1% by weight stock solution containing the 49 nm microspheres to 2 liters of a solution containing 0.1% Triton® X-100 in DI water.

Then, under a differential pressure of 41.4 kPa (6 psid) across the filtration membrane, 250 mL of challenge solution was allowed to flow through the membrane. The challenge solution was directly exposed to fluid flow. The filtrate was collected and labeled as "downstream."

A Cary Eclipse fluorescent spectrophotometer was used to measure the fluorescence intensity of challenge solution, background and the downstream sample. The intensity measurements from the spectrophotometer were calibrated against a 3 point curve with calibration standards generated from a challenge solution of three different particle concentrations of a given microsphere size.

From the intensity values, the particle retention efficiency (E) in % was calculated according to the following equation:

$$E = 100\% * \left[ 1 - \left( \frac{downstream - background}{challenge - background} \right) \right]$$

A duplicate filtration article sample was placed on another stainless steel plate with design and dimensions as described above. The sample, along with the stainless steel plate was then placed inside a holder with a fluid inlet and outlet. The sample was exposed to Propylene Glycol flow at 140°C for 14 days. The differential pressure across the sample was around 20.7 kPa (3.0 psid).

After 14 days, the particle filtration efficiency was measured on this sample as described above and reported as Final Efficiency (after 14 day exposure to Propylene glycol at 140°C).

Negligible change between the initial and final efficiency numbers show that the test sample provided superior long term particle retention and would indicate that such a test sample would maintain its particle filtration efficiency over the life of the filtration device.

Bubble Point Measurement

The bubble point for a filtration membrane sample employable in a filtration article may be measured according to the general teachings of ASTM F31 6-03 using a Capillary Flow Porometer (Model CFP 1500 AEXL from Porous Materials Inc., Ithaca, N.Y.). The sample membrane may be placed into the sample chamber and wet with SilWick Silicone Fluid (available from Porous Materials Inc.) having a surface tension of 19.1 dynes/cm, The bottom clamp of the sample chamber has a 2.54 cm diameter, 3.175 mm thick porous metal disc insert (Mott Metallurgical, Farmington, Conn., 40 micron porous metal disk) and the top clamp of the sample chamber had a 3.175 mm diameter hole. Using the Capwin software version 6.62.1 the following parameters may be set as specified in the table immediately below. The values presented for bubble point were the average of two measurements.

| Parameter | Set Point |
|---|---|
| maxflow (cc/m) | 200000 |
| bublflow (cc/m) | 100 |
| F/PT (old bubltime) | 40 |
| minbppres (PSI) | 0 |
| zerotime (sec) | 1 |
| v2incr(cts) | 10 |
| preginc (cts) | 1 |
| pulse delay (sec) | 2 |
| maxpre (PSI) | 500 |

(continued)

| Parameter | Set Point |
|---|---|
| pulse width (sec) | 0.2 |
| mineqtime (sec) | 30 |
| presslew (cts) | 10 |
| flowslew (cts) | 50 |
| eqiter | 3 |
| aveiter | 20 |
| maxpdif (PSI) | 0.1 |
| maxfdif (cc/m) | 50 |
| sartp (PSI) | 1 |
| sartf (cc/m) | 500 |

## EXAMPLES

Example 1

A knit sample was made from expanded PTFE fiber with the characteristics described in Table I. A warp beam composed of 400 ends of the ePTFE fiber was created where tension over the width of the beam was held constant resulting in a warp beam with minimal wrinkles and fiber crossovers. The warp beam was placed on a typical 2-bar warp knitting machine. Additional supply cones of the ePTFE fiber were used for the insertion fiber. The desired knit was produced using a 2-bar in lay Raschel locked stitch design.

**Table I**

| Filament Type | Monofilament |
|---|---|
| PTFE Fiber Description | 100 Denier ePTFE flat fiber (Part Number V111776 (available from W.L. Gore & Associates, Inc) twisted at 32 Twists Per Inch (TPI), Z-configuration using a Ring Twister |
| PTFE Fiber Diameter | 90 micron |
| Knit Pattern | 2 bar in lay Raschel locked stitch |
| Knit Gauge | 32 |
| Knit Mass (g/m$^2$) | 180 |
| Wales Per Inch (WPI) | 33-35 relaxed |
| Courses Per Inch (CPI) | 94-96 relaxed |

The above knit layer was placed downstream of a layer of an expanded PTFE membrane made according to the teachings of U.S. Patent Publication No. 2010/0248324 and U.S. Patent Publication No. 2011/0039960 and pending U.S. Provisional Patent Application No. 61/538,625. This two layered stack was subject to the long term particle filtration efficiency test with the membrane side exposed to direct fluid flow, The initial efficiency and final efficiency were both measured to be 95% indicating superior long term particle retention of this stack.

This two layered stack was subject to the Viscous Liquid Flow Test where in the membrane side was directly exposed to fluid flow. No drop in differential pressure (from the initial value of 345 kPa (50 psid)) across the stack was observed even after 24 hours. This test was run for 96 hours and no observable drop in differential pressure occurred even after 96 hours.

Example 2

An intermediate layer comprising a porous article having an expanded PTFE layer and a coherent irregular network of FEP particles on one side was made according to the teachings of U.S. Patent Publication No. 2012/064273. This layer was placed between the expanded PTFE membrane and the Knit layer of stack of Example 1. The orientation was such that the ePTFE layer of the intermediate layer was adjacent to the knit layer and the coherent irregular network of FEP particles was adjacent to the ePTFE layer of the stack. This stack was subject to the long term particle filtration efficiency test. The initial efficiency and final efficiency were both measured to be 95% indicating superior long term particle retention of this stack.

Comparative Example 1

The PTFE net layer and the expanded PTFE membrane were removed from a commercially available pleated cartridge filter (Product Number ABFG1GPK3EH1-K3 Ultikleen G2 Excellar ER 20nm from Pall Corporation). This two layered stack was subject to the Viscous Liquid Flow Test where in the membrane side was directly exposed to fluid flow. The differential pressure dropped from 345 kPa (50 psid) to less than about 34.5 kPa (5 psid) within 5 minutes, indicating low stability.
According to the long term particle filtration efficiency test on the stack, the initial efficiency and final efficiency were measured to be 90% and 69% respectively indicating poor long term particle retention performance.

Comparative Example 2

The PTFE net layer and the expanded PTFE membrane were removed from a commercially available pleated cartridge filter (Product Number FLHF050-10M3F-PW-300 Fluoryte™ 50 nm from Pall Corporation). The two layered stack was subject to the Viscous Liquid Flow Test where in the membrane side was directly exposed to fluid flow. The differential pressure dropped from 345 kPa (50 psid) to less than about 34.5 kPa (5 psid) within 5 minutes.

Comparative Example 3

A PFA woven layer was removed from a commercially available pleated cartridge filter (Product QCCYATM01, Quickchange® 0.03 micron rated cartridge from Mykrolis Corporation), A 0.1 micron rated pore size expanded PTFE membrane from a commercially available pleated cartridge filter (Fluoroflow® XF SELECT, Parker Hannifin Corporation) was placed upstream of the PFA woven layer. The two layered stack was subject to the Viscous Liquid Flow Test where in the PTFE membrane side was directly exposed to fluid flow. The differential pressure dropped from 345 kPa (50 psid) to less than about 34.5 kPa (5 psid) within 5 minutes.

**Claims**

1.  A filtration article (1) for filtration of particles from a fluid stream, comprising: a first layer (10), positionable across a fluid stream, comprising a porous PTFE membrane for filtering particles from the fluid stream; and

    a second layer (12), positionable across said fluid stream to provide for at least one of drainage of and support of said first layer (10), comprising a plurality of strands (60) of fluoropolymer fibers arranged to form a knit having a plurality of interlocking regions (70) that are each defined by corresponding different sets of at least two interlocking loop portions (62) of said plurality of strands of fluoropolymer fibers, wherein said plurality of interlocking regions (70) of the knit define a plurality of wales (80) and a plurality of courses (82), and wherein for at least a first portion of said plurality of strands each strand comprises different loop portions that partially define different, alternating ones of said plurality of interlocking regions (70) located along at least two different ones of said plurality of wales (80),
    wherein said fluid stream has fluid pressure load of between 6.89 kPa (1 psid) and 68.9 kPa (10 psid), wherein said plurality of interlocking regions (70) define a plurality of voids therebetween across said knit layer, wherein each of said plurality of voids has a corresponding first area prior to being positioned in said fluid stream and a corresponding second area while positioned in said fluid stream, and wherein for each of said plurality of voids the corresponding second area is less than two times the corresponding first area thereof.

2.  The filtration article of Claim 1, wherein each of said plurality of interlocking regions (70) is defined by corresponding different sets of at least three interlocking loop portions (62) of said plurality of strands (60) of fluoropolymer fibers, wherein for each of said plurality of interlocking regions (70) the corresponding interlocking loop portions (62) each extend about an arc of at least 90°, or at least 180°, along different, corresponding arcuate paths.

3.  The filtration article of Claim 1, wherein for at least a second portion of said plurality of strands (60) each strand comprises different loop portions that partially define different ones of all of said plurality of interlocking regions (70) located in a corresponding one of said plurality of wales (80).

4. The filtration article of Claim 1, wherein at least a portion of said plurality of strands (60) is of a rounded outer configuration and/or is twisted, or wherein each strand of at least said portion of said plurality of strands is twisted.

5. The filtration article of Claim 1, wherein each of said plurality of interlocking regions (70) is located at corresponding distances from adjacent ones of said plurality of interlocking regions (70) along said wales (80) and courses (82), and wherein for each of said plurality of interlocking regions (70) said corresponding distances while positioned in said fluid stream are within 200% of initial values thereof prior to being positioned in the fluid stream.

6. The filtration article of Claim 1, wherein said second layer (12) is positioned adjacent to and downstream of the first layer (10) to provide for at least support of the first layer (10), optionally wherein
the second layer (12) is positioned directly adjacent to the first layer (10);

   wherein the first layer (10) and second layer (12) are interconnected; or
   the first layer (10) and the second layer (12) are pleated and positioned in at least partially nested co-relation, and wherein pleats of said second layer (12) extend parallel to one of said plurality of wales (80) or said plurality of courses (82).

7. The filtration article of Claim 1, wherein said second layer (12) is positioned adjacent to and downstream of the first layer (10) to provide for at least support of the first layer (10), the filtration article further comprising: a third layer (14), positionable across said fluid stream upstream of the first layer (10) to provide for drainage of the first layer (10), comprising a plurality of strands (60) of fluoropolymer fibers arranged to form a knit having a plurality of interlocking regions (70) that are each defined by corresponding different sets of at least two interlocking loop portions (62) of said plurality of strands (60) of fluoropolymer fibers, wherein said plurality of interlocking regions (70) of the knit define a plurality of wales (80) and a plurality of courses (82), and wherein for at least a first portion of said plurality of strands (60) each strand comprises different loop portions that partially define different, alternating ones of said plurality of interlocking regions (70) located along at least two different ones of said plurality of wales (80), optionally wherein

   the third layer (14) is pleated and is positionable across said fluid stream upstream of the first layer (10) in at least partially nested co-relation; or
   the first layer (10), second layer (12), and third layer (14) are interconnected.

8. The filtration article of Claim 1, wherein voids extend between the plurality of interlocking regions (70) through the second layer (12), optionally wherein areas of opposing sides of said second layer (12) are defined by said knit and said voids, and wherein said voids define at least 10% of said areas, and further optionally wherein said interlocking regions (70) define at least 40% of said areas.

9. A method for filtering particles from a fluid stream, comprising:

   filtering particles from a fluid stream having a fluid pressure utilizing a porous PTFE membrane (10) positioned across the fluid stream; and,
   supporting said porous PTFE membrane (10) against a fluid pressure load of between 6.89 kPa (1 psid) and 68.9 kPa (10 psid) applied by the fluid stream utilizing a stable knit layer (50) positioned downstream of the porous PTFE membrane (10), wherein said knit layer (50) comprises a plurality of strands (60) of fluoropolymer fibers arranged to form a knit having a plurality of interlocking regions (70) that are each defined by corresponding different sets of at least two interlocking loop portions (62) of said plurality of strands (60) of fluoropolymer fibers, wherein said supporting step comprises distributing said fluid pressure load across said knit layer at said interlocking regions thereof,
   wherein said plurality of interlocking regions (70) of the knit define a plurality of wales (80) and a plurality of courses (82), and wherein for at least a first portion of said plurality of strands each strand comprises different loop portions that partially define different, alternating ones of said plurality of interlocking regions (70) located along at least two different ones of said plurality of wales (80),
   wherein said plurality of interlocking regions (70) define a plurality of voids therebetween across said knit layer (50),
   wherein each of said plurality of voids has a corresponding first area prior to being positioned in said fluid stream and a corresponding second area while positioned in said fluid stream, and wherein for each of said plurality of voids the corresponding second area is less than two times the corresponding first area thereof.

**10.** The method of Claim 9, wherein each of said plurality of interlocking regions (70) is defined by corresponding different sets of at least three interlocking loop portions (62) of said plurality of strands (60) of fluoropolymer fibers.

**11.** The method of Claim 9 or 10, wherein each of said plurality of interlocking regions (70) is located at corresponding distances from adjacent ones of said plurality of interlocking regions (70) along said wales (80) and courses (82), and wherein for each of said plurality of interlocking regions (70) said corresponding distances while positioned in said fluid stream are within 200% of initial values thereof prior to being positioned in the fluid stream.

**Patentansprüche**

**1.** Filtrationsartikel (1) zum Filtrieren von Partikeln aus einem Fluidstrom, umfassend:

eine erste Schicht (10), die quer durch einen Fluidstrom positionierbar ist und eine poröse PTFE-Membran zum Filtrieren von Partikeln aus dem Fluidstrom umfasst, und
eine zweite Schicht (12), die quer durch den Fluidstrom positionierbar ist, um für mindestens eines von Dränage und Stützung der ersten Schicht (10) zu sorgen, umfassend eine Vielzahl an Strängen (60) aus Fluorpolymerfasern, die so angeordnet sind, dass sie ein Gestrick mit einer Vielzahl an verflochtenen Bereichen (70) bilden, die jeweils durch entsprechende unterschiedliche Sätze von mindestens zwei verflochtenen Schlingenabschnitten (62) der Vielzahl an Strängen aus Fluorpolymerfasern festgelegt sind, wobei die Vielzahl an verflochtenen Bereichen (70) des Gestricks eine Vielzahl an Maschenstäbchen (80) und eine Vielzahl an Maschenreihen (82) bilden, und wobei für mindestens einen ersten Teil der Vielzahl an Strängen jeder Strang unterschiedliche Schlaufenabschnitte umfasst, die teilweise unterschiedliche, alternierende der Vielzahl an verflochtenen Bereichen (70) bilden, die entlang mindestens zweier unterschiedlicher der Vielzahl an Maschenstäbchen (80) angeordnet sind,
wobei der Fluidstrom eine Fluiddrucklast zwischen 6,89 kPa (1 psid) und 68,9 kPa (10 psid) aufweist, wobei die Vielzahl der verflochtenen Bereiche (70) eine Vielzahl an Hohlräumen dazwischen über die Strickschicht begrenzt, wobei jeder der Vielzahl an Hohlräumen, bevor er in dem Fluidstrom positioniert wird, einen entsprechenden ersten Bereich aufweist und, während er in dem Fluidstrom positioniert ist, einen entsprechenden zweiten Bereich aufweist, und wobei für jeden der Vielzahl an Hohlräumen der entsprechende zweite Bereich kleiner ist als das Zweifache des entsprechenden ersten Bereichs desselben.

**2.** Filtrationsartikel nach Anspruch 1, wobei jeder der Vielzahl an verflochtenen Bereichen (70) durch entsprechende unterschiedliche Sätze von mindestens drei verflochtenen Schlingenabschnitten (62) der Vielzahl an Strängen (60) aus Fluorpolymerfasern festgelegt ist, wobei sich für jeden der Vielzahl an verflochtenen Bereichen (70) die entsprechenden verflochtenen Schlingenabschnitte (62) jeweils über einen Bogen von mindestens 90° oder mindestens 180° entlang verschiedener entsprechender bogenförmiger Pfade erstrecken.

**3.** Filtrationsartikel nach Anspruch 1, wobei für mindestens einen zweiten Teil der Vielzahl an Strängen (60) jeder Strang unterschiedliche Schlingenabschnitte umfasst, die teilweise unterschiedliche von allen der Vielzahl an verflochtenen Bereichen (70) festlegen, die in einem entsprechenden der Vielzahl an Maschenstäbchen (80) angeordnet sind.

**4.** Filtrationsartikel nach Anspruch 1, wobei mindestens ein Teil der Vielzahl an Strängen (60) eine abgerundete äußere Gestalt hat und/oder gewunden ist oder wobei jeder Strang von wenigstens diesem Teil der Vielzahl an Strängen gewunden ist.

**5.** Filtrationsartikel nach Anspruch 1, wobei jeder der Vielzahl an verflochtenen Bereichen (70) in einem entsprechenden Abstand von benachbarten der Vielzahl an verflochtenen Bereichen (70) entlang der Maschenstäbchen (80) und der Maschenreihen (82) angeordnet ist und wobei für jeden der Vielzahl an verflochtenen Bereichen (70) die entsprechenden Abstände, während sie in dem Fluidstrom angeordnet sind, innerhalb von 200 % des Anfangswerts derselben vor der Anordnung im Fluidstrom liegen.

**6.** Filtrationsartikel nach Anspruch 1, wobei die zweite Schicht (12) benachbart zur ersten Schicht (10) und stromabwärts derselben angeordnet ist, um zumindest eine Stützung der ersten Schicht bereitzustellen, wobei optional
die zweite Schicht (12) unmittelbar neben der ersten Schicht (10) angeordnet ist, wobei die erste Schicht (10) und die zweite Schicht (12) miteinander verbunden sind, oder wobei die erste Schicht (10) und die zweite Schicht (12) gefaltet und in zumindest teilweise ineinander geschachtelter Beziehung positioniert sind, und wobei Falten der

# EP 2 874 734 B1

zweiten Schicht (12) parallel zu einem der Vielzahl an Maschenstäbchen (80) oder der Vielzahl an Maschenreihen (82) verlaufen.

7. Filtrationsartikel nach Anspruch 1, wobei die zweite Schicht (12) benachbart zu und stromabwärts der ersten Schicht (10) angeordnet ist, um zumindest für eine Stützung der ersten Schicht (10) zu sorgen, wobei der Filtrationsartikel weiter umfasst: eine dritte Schicht (14), die quer durch den Fluidstrom und stromaufwärts der ersten Schicht (10) positionierbar ist, um für eine Dränage der ersten Schicht zu sorgen, umfassend eine Vielzahl an Strängen (60) aus Fluorpolymerfasern, die so angeordnet sind, dass sie ein Gestrick mit einer Vielzahl an verflochtenen Bereichen (70) bilden, die jeweils durch entsprechende unterschiedliche Sätze von mindestens zwei verflochtenen Schlingenabschnitten (62) der Vielzahl an Strängen (60) aus Fluorpolymerfasern festgelegt sind, wobei die Vielzahl an verflochtenen Bereichen (70) des Gestricks eine Vielzahl an Maschenstäbchen (80) und eine Vielzahl an Maschenreihen (82) bildet, und wobei für mindestens einen ersten Teil der Vielzahl an Strängen (60) jeder Strang unterschiedliche Schlaufenabschnitte umfasst, die teilweise unterschiedliche, alternierende der Vielzahl an verflochtenen Bereichen (70) bilden, die entlang mindestens zweier unterschiedlicher der Vielzahl an Maschenstäbchen (80) angeordnet sind, wobei optional

die dritte Schicht (14) gefaltet und quer durch den Fluidstrom stromaufwärts der ersten Schicht (10) in zumindest teilweise ineinander geschachtelter Beziehung positionierbar ist, oder
die erste Schicht (10), die zweite Schicht (12) und die dritte Schicht (14) miteinander verbunden sind.

8. Filtrationsartikel nach Anspruch 1, wobei sich Hohlräume zwischen der Vielzahl an verflochtenen Bereichen (70) durch die zweite Schicht (12) erstrecken, wobei optional Bereiche gegenüberliegender Seiten der zweiten Schicht (12) durch das Gestrick und die Hohlräume festgelegt sind und wobei die Hohlräume wenigstens 10 % der Bereiche ausmachen, und wobei weiter optional die verschlungenen Bereiche (70) wenigstens 40 % der Bereiche ausmachen.

9. Verfahren zum Filtrieren von Partikeln aus einem Fluidstrom, umfassend:

Filtrieren von Partikeln aus einem Fluidstrom mit einem Fluiddruck unter Verwendung einer porösen PTFE-Membran (10), die quer durch den Fluidstrom angeordnet ist, und
Stützen der porösen PTFE-Membran (10) gegen eine Fluiddrucklast zwischen 6,89 kPa (1 psid) und 68,9 kPa (10 psid), die durch den Fluidstrom ausgeübt wird, unter Verwendung einer stabilen Strickschicht (50), die stromabwärts der porösen PTFE-Membran (10) angeordnet ist, wobei die Strickschicht (50) eine Vielzahl an Strängen (60) aus Fluorpolymerfasern umfasst, die so angeordnet sind, dass sie ein Gestrick bilden mit einer Vielzahl an verflochtenen Bereichen (70), die jeweils durch entsprechende unterschiedliche Sätze von mindestens zwei verflochtenen Schlingenabschnitten (62) der Vielzahl an Strängen (60) aus Fluorpolymerfasern festgelegt sind,
wobei der Stützschritt das Verteilen der Fluiddrucklast über die Strickschicht an deren verschlungenen Bereichen umfasst,
wobei die Vielzahl an verflochtenen Bereichen (70) des Gestricks eine Vielzahl an Maschenstäbchen (80) und eine Vielzahl an Maschenreihen (82) bildet und wobei für mindestens einen ersten Teil der Vielzahl an Strängen jeder Strang unterschiedliche Schlaufenabschnitte umfasst, die teilweise unterschiedliche, alternierende der Vielzahl an verflochtenen Bereichen (70) bilden, die entlang mindestens zweier unterschiedlicher der Vielzahl an Maschenstäbchen (80) angeordnet sind,
wobei die Vielzahl der verflochtenen Bereiche (70) eine Vielzahl an Hohlräumen dazwischen über die Strickschicht (50) begrenzt,
wobei jeder der Vielzahl an Hohlräumen, bevor er in dem Fluidstrom positioniert wird, einen entsprechenden ersten Bereich aufweist und, während er in dem Fluidstrom positioniert ist, einen entsprechenden zweiten Bereich aufweist, und wobei für jeden der Vielzahl an Hohlräumen der entsprechende zweite Bereich kleiner ist als das Zweifache des entsprechenden ersten Bereichs desselben.

10. Verfahren nach Anspruch 9, wobei jeder der Vielzahl an verflochtenen Bereichen (70) durch entsprechende unterschiedliche Sätze von mindestens drei verflochtenen Schlingenabschnitten (62) der Vielzahl an Strängen (60) aus Fluorpolymerfasern festgelegt ist.

11. Verfahren nach Anspruch 9 oder 10, wobei jeder der Vielzahl an verflochtenen Bereichen (70) in einem entsprechenden Abstand von benachbarten der Vielzahl an verflochtenen Bereichen (70) entlang der Maschenstäbchen (80) und der Maschenreihen (82) angeordnet ist und wobei für jeden der Vielzahl an verflochtenen Bereichen (70) die entsprechenden Abstände, während sie in dem Fluidstrom angeordnet sind, innerhalb von 200 % des Anfangswerts derselben vor der Anordnung im Fluidstrom liegen.

**Revendications**

1. Article de filtration (1) destiné à la filtration de particules d'un flux de fluide, comprenant :

   une première couche (10), positionnable à travers un flux de fluide, comprenant une membrane poreuse en PTFE destinée à filtrer les particules du flux de fluide ; et
   une deuxième couche (12), positionnable à travers ledit flux de fluide pour prévoir au moins un parmi le drainage et le support de ladite première couche (10), comprenant une pluralité de brins (60) de fibres de polymère fluoré agencés pour former un tricot possédant une pluralité de zones d'interblocage (70) qui sont chacune définies par des ensembles différents correspondants d'au moins deux parties de boucles d'interblocage (62) de ladite pluralité de brins de fibres de polymère fluoré, ladite pluralité de zones d'interblocage (70) du tricot définissant une pluralité de colonnes de mailles (80) et une pluralité de rangées de mailles (82), et pour au moins une première partie de ladite pluralité de brins, chaque brin comprenant différentes parties de boucle qui définissent partiellement différentes zones d'interblocage alternées parmi ladite pluralité de zones d'interblocage (70) situées le long d'au moins deux différentes parmi ladite pluralité de colonnes de mailles (80),
   ledit flux de fluide possédant une charge de pression de fluide comprise entre 6,89 kPa (1 psid) et 68,9 kPa (10 psid), ladite pluralité de zones d'interblocage (70) définissant une pluralité de vides entre elles à travers ladite couche de tricot, chacun de ladite pluralité de vides possédant une première surface correspondante avant d'être positionné dans ledit flux de fluide et une seconde surface correspondante pendant qu'il est positionné dans ledit flux de fluide, et pour chacun de ladite pluralité de vides, ladite seconde surface correspondante étant inférieure à deux fois sa première surface correspondante.

2. Article de filtration selon la revendication 1, chacune de ladite pluralité de zones d'interblocage (70) étant définie par différents ensembles correspondants d'au moins trois parties de boucle d'interblocage (62) de ladite pluralité de brins (60) de fibres de polymère fluoré, pour chacune de ladite pluralité de zones d'interblocage (70), lesdites parties de boucle d'interblocage correspondantes (62) s'étendant chacune autour d'un arc d'au moins 90°, ou d'au moins 180°, le long de différents trajets en arc correspondants.

3. Article de filtration selon la revendication 1, pour au moins une seconde partie de ladite pluralité de brins (60), chaque brin comprenant différentes parties de boucle qui définissent partiellement des différentes parmi l'ensemble de ladite pluralité de zones d'interblocage (70) situées dans l'une correspondante de ladite pluralité de colonnes de mailles (80).

4. Article de filtration selon la revendication 1, au moins une partie de ladite pluralité de brins (60) possédant une configuration externe arrondie et/ou étant torsadée, ou chaque brin d'au moins ladite partie de ladite pluralité de brins étant torsadé.

5. Article de filtration selon la revendication 1, chacune de ladite pluralité de zones d'interblocage (70) étant située à des distances correspondantes à partir de celles adjacentes parmi ladite pluralité de zones d'interblocage (70) le long desdites colonnes de mailles (80) et rangées de mailles (82), et pour chacune de ladite pluralité de zones d'interblocage (70) lesdites distances correspondantes pendant qu'elle est positionnée dans ledit flux de fluide étant dans les limites de 200 % de ses valeurs initiales avant d'être positionnée dans le flux de fluide.

6. Article de filtration selon la revendication 1, ladite deuxième couche (12) étant positionnée adjacente à la première couche (10) et en aval de celle-ci, pour prévoir au moins un support de la première couche (10), éventuellement

   ladite deuxième couche (12) étant positionnée directement adjacente à la première couche (10) ; ladite première couche (10) et ladite deuxième couche (12) étant interconnectées ; ou
   ladite première couche (10) et ladite deuxième couche (12) étant plissées et positionnées dans une co-relation au moins partiellement imbriquée, et lesdits plis de ladite deuxième couche (12) s'étendant parallèlement à l'une de ladite pluralité de colonnes de mailles (80) ou de ladite pluralité de rangées de mailles (82).

7. Article de filtration selon la revendication 1, ladite deuxième couche (12) étant positionnée adjacente à la première couche (10) et en aval de celle-ci pour prévoir au moins un support de la première couche (10), ledit article de filtration comprenant en outre : une troisième couche (14), positionnable à travers ledit flux de fluide en amont de la première couche (10) pour prévoir le drainage de la première couche (10), comprenant une pluralité de brins (60) de fibres de polymère fluoré agencés pour former un tricot possédant une pluralité de zones d'interblocage (70) qui sont chacune définies par différents ensembles correspondants d'au moins deux parties de boucle d'interblocage (62) de ladite pluralité de brins (60) de fibres de polymère fluoré, ladite pluralité de zones d'interblocage (70) du tricot définissant une pluralité de colonnes de mailles (80) et une pluralité de rangées de mailles (82), et pour au moins une première partie de ladite pluralité de brins (60), chaque brin comprenant différentes parties de boucle qui définissent partiellement différentes zones d'interblocage alternées parmi ladite pluralité de zones d'interblocages (70) situées le long d'au moins deux différentes parmi ladite pluralité de colonnes de mailles (80), éventuellement

ladite troisième couche (14) étant plissée et pouvant être positionnée à travers ledit flux de fluide en amont de la première couche (10) dans une co-relation au moins partiellement imbriquée ; ou
ladite première couche (10), ladite deuxième couche (12) et ladite troisième couche (14) étant interconnectées.

8. Article de filtration selon la revendication 1, des vides s'étendant entre la pluralité de zones d'interblocage (70) à travers la deuxième couche (12), éventuellement des surfaces de côtés opposés de ladite deuxième couche (12) étant définies par ledit tricot et lesdits vides, et lesdits vides définissant au moins 10 % desdites surfaces, et en outre éventuellement lesdites zones d'interblocage (70) définissant au moins 40 % desdites surfaces.

9. Procédé permettant le filtrage de particules d'un flux de fluide, comprenant :

le filtrage de particules d'un flux de fluide possédant une pression de fluide à l'aide d'une membrane poreuse en PTFE (10) positionnée à travers le flux de fluide ; et,
le support de ladite membrane poreuse en PTFE (10) contre une charge de pression de fluide comprise entre 6,89 kPa (1 psid) et 68,9 kPa (10 psid) appliquée par le flux de fluide à l'aide d'une couche de tricot stable (50) positionnée en aval de la membrane poreuse en PTFE (10), ladite couche de tricot (50) comprenant une pluralité de brins (60) de fibres de polymère fluoré agencés pour former un tricot possédant une pluralité de zones d'interblocage (70) qui sont chacune définies par différents ensembles correspondants d'au moins deux parties de boucle d'interblocage (62) de ladite pluralité de brins (60) de fibres de polymère fluoré, ladite étape de support comprenant la répartition de ladite charge de pression de fluide à travers ladite couche de tricot au niveau desdites zones d'interblocage de celle-ci,
ladite pluralité de zones d'interblocage (70) du tricot définissant
une pluralité de colonnes de mailles (80) et une pluralité de rangées de mailles (82), et pour au moins une première partie de ladite pluralité de brins, chaque brin comprenant différentes parties de boucle qui définissent partiellement différentes zones d'interblocage alternées parmi ladite pluralité de zones d'interblocage (70) situées le long d'au moins deux différentes parmi ladite pluralité de colonnes de mailles (80),
ladite pluralité de zones d'interblocage (70) définissant une pluralité de vides entre elles à travers ladite couche de tricot (50),
chacun de ladite pluralité de vides possédant une première surface correspondante avant d'être positionné dans ledit flux de fluide et une seconde surface correspondante pendant qu'il est positionné dans ledit flux de fluide, et pour chacun de ladite pluralité de vides, ladite seconde surface correspondante étant inférieure à deux fois la première surface correspondante de celui-ci.

10. Procédé selon la revendication 9, chacune de ladite pluralité de zones d'interblocage (70) étant définie par différents ensembles correspondants d'au moins trois parties de boucle d'interblocage (62) de ladite pluralité de brins (60) de fibres de polymère fluoré.

11. Procédé selon la revendication 9 ou 10, chacune de ladite pluralité de zones d'interblocage (70) étant située à des distances correspondantes de celles adjacentes parmi ladite pluralité de zones d'interblocage (70) le long desdites colonnes de mailles (80) et desdites rangées de mailles (82), et pour chacune de ladite pluralité de zones d'interblocage (70), lesdites distances correspondantes pendant qu'elle est positionnée dans ledit flux de fluide étant dans les limites de 200 % de leurs valeurs initiales avant d'être positionnée dans le flux de fluide.

FIG. 1

EP 2 874 734 B1

FIG. 2A

FIG. 2B

FIG. 3A

90

1mm

1mm

FIG. 3B

0.10 mm/div

90

BAR 1    BAR 2

FIG. 4A

FIG. 4B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100159766 A1
- US 7306729 B
- US 3953566 A
- US 5476589 A
- US 5183545 A
- US 20100248324 A
- US 5708044 A
- US 6541589 B
- US 7531611 B
- US 906877
- US 12410050 B
- US 2012064273 A
- US 20110039960 A
- US 61538625